# EUROPÄISCHE PATENTSCHRIFT

(11) **EP 1 459 593 B1**
(45) Veröffentlichungstag und Bekanntmachung des Hinweises auf die Patenterteilung: **12.04.2006**
(21) Anmeldenummer: 03787590.3
(22) Anmeldetag: 11.06.2003
(51) Int. Cl.: H04R 1/02, H04M 1/03

(54) **RAUM- UND PLATZSPARENDE AUDIOEINRICHTUNG**
COMPACT AND SPACE-SAVING AUDIO DEVICE
DISPOSITIF AUDIO PEU ENCOMBRANT

(30) Priorität: 19.07.2002 DE 10232953
(43) Veröffentlichungstag der Anmeldung: 22.09.2004
(73) Patentinhaber: BenQ Corporation, Gueishan Taoyuan 333 (TW)
(72) Erfinder: LARSEN, Clemen, Boje, DK-9000 Aalborg (DK); PETERSEN, Thomas, Pinstrup, DK-9541 Suldrup (DK); RYE, Palle, DK-9310 Vodskov (DK)
(74) Vertreter: Aufhauser, Christoph
(86) Internationale Anmeldenummer: PCT/DE2003/001943
(87) Internationale Veröffentlichungsnummer: WO 2004/017671

(56) Entgegenhaltungen:
- WO-A-00/59263
- WO-A-01/76342
- DE-A- 3 139 538
- DE-U- 9 407 781

## Beschreibung

### 1) Einleitung

Moderne mobile Endgeräte der Kommunikations- und Datentechnik (Mobiltelefone, Handhelds, PDA's, Pocket-PC's, Organizer) sollen eine ästhetisch ansprechende Form besitzen, möglichst klein, leicht und kompakt gebaut sein, gleichzeitig aber auch ausreichend große und damit gut bedienbare Eingabeelemente sowie einen großflächigen, hochauflösenden Bildschirm besitzen. Diese sich zum Teil widersprechenden Anforderungen stellen den Entwickler mobiler Endgeräte vor erhebliche konstruktive Probleme.

Die stetige Verkleinerung der Endgeräte hat inzwischen ein Stadium erreicht, wo beispielsweise jede Vergrößerung des Bildschirms die für die Tastatur und die sonstigen Eingabeelemente verbleibende Gehäuseoberfläche in einer die Bedienbarkeit und Handhabung beeinträchtigenden oder zumindest erschwerenden Weise verringert. Gefragt sind somit konstruktive Lösungen, welche den Entwicklern und Designern eine hinsichtlich der ästhetischen Wirkung und der Benutzerfreundlichkeit optimale Anordnung und Verteilung der der Mensch-Maschine-Kommunikation dienenden Komponenten auf der Gehäusevorderseite gestatten.

### 2) Stand der Technik

In der WO 00/70906 und der GB 2 310 559 wird jeweils vorgeschlagen, den Lautsprecher eines Mobilfunkgerätes nicht mehr, wie bisher üblich, unmittelbar hinter den Schallaustrittsöffnungen des Gehäuses, sondern unterhalb der mit den elektronischen Komponenten bestückten Leiterplatte anzuordnen, wobei der Schallkanal im Falle der aus der WO'906 bekannten Lautsprechereinrichtung durch eine kreisförmige Bohrung der Leiterplatte verläuft bzw. die an der Leiterplatte befestigte Lautsprecherhalterung und das Gehäuse den Schallkanal bilden.

Die EP 1 107 542 A1 beschreibt ein Mobiltelefon, in dessen Gehäuse Bildschirm, Leiterplatte und Lautsprecher unmittelbar hintereinander angeordnet sind. Der den Lautsprecher und die Schallaustrittsöffnungen auf der Gehäusevorderseite verbindende Schallkanal verläuft zwischen dem bildschirmseitigen Kopfteil der Leiterplatte und der dem Kopfteil gegenüberliegenden Gehäusewand. Die durch das Versetzen des Lautsprechers hinter die Leiterplatte gewonnene Fläche auf der Gehäusevorderseite ermöglicht die Verwendung eines größeren Bildschirms und/oder den Einsatz einer Tastatur mit größeren Eingabeelementen, bzw. eine Verkürzung des Gehäuses bei gleichbleibender Größe des Bildschirms und/oder der Tastatur.

Die SE 451 933 betrifft ein konventionelles, schnurgebundenes Telefon. Der Lautsprecher dieses Telefons ist unmittelbar hinter den Schallaustrittsöffnungen des vorderen Gehäuseteils angeordnet und in einer Bohrung der Leiterplatte mittels eines ringförmigen Dichtelements befestigt.

Die DE 3 139 538 A1 hat einen Lautssprecher mit einem Mittelton/Hochtonlautsprecher zum Gegenstand, welcher ein Magnetsystem mit einer Montageplatte sowie eine Mittelton/Hochton-Membran aufweist. Die Montageplatte ist so ausgebildet, dass sie in eine Aussparung im Gehäuse passt, während die Membran die Aussparung bis auf einen gleichmäßigen Spalt ausfüllt. Die Vorderseite der Membran steht über die Membranebene der Montageplatte hervor, so dass sie bündig mit der Vorderseite der Schallwand abschließt.

Die in bekannten Mobiltelefonen angewandten Methoden der Anordnung und Halterung ausreichend großer Lautsprecher erfordern ein vergleichsweise dickes Gehäuse. Dies ist insbesondere dann von Nachteil, wenn das Mobiltelefon in Taschen oder Kleidungsstücken leicht zugänglich aufbewahrt oder mittels einer Klammer an einem Gürtel oder einem Kleidungsteil bequem befestigt werden soll.

### 3) Ziel und Vorteile der Erfindung

Ziel der Erfindung ist die Schaffung einer Audioeinrichtung, welche sich auch in ein vergleichsweise flaches Gehäuse eines elektronischen Gerätes, beispielsweise eines Mobiltelefons, platz- und raumsparend einbauen lässt. Diese Aufgabe wird erfindungsgemäß durch eine Audioeinrichtung mit den in Patentanspruch 1 angegebenen Merkmalen gelöst. Die abhängigen Ansprüche betreffen vorteilhafte Weiterbildungen und Ausgestaltungen der Erfindung.

Die Erfindung ermöglicht beispielsweise die Herstellung eines Mobiltelefons, dessen flaches und vergleichsweise kurzes Gehäuse, trotz Einbaus eines größeren und damit hinsichtlich der akustischen Eigenschaften höherwertigen Lautsprechers, eine noch ausreichend große, mit Tastatur und Bildschirm belegbare Bedieneroberfläche aufweist.

### 4) Zeichnungen

Ausführungsbeispiele der Erfindung sind in den Zeichnungen schematisch dargestellt. Es zeigen:
- Figur 1: ein erstes Ausführungsbeispiel einer erfindungsgemäßen Audioeinrichtung;
- Figur 2: ein in der erfindungsgemäßen Audioeinrichtung verwendbares Trägerelement im Querschnitt und in Draufsicht;
- Figur 3a: eine mögliche Anordnung eines mit einer Abschirmung versehenen elektroakustischen Wandlers bezüglich der schallraumseitigen Oberfläche des Trägerelements;
- Figur 3b: die Rückseite einer elektromagnetischen Abschirmung des Wandlers;
- Figur 4a: ein mit einer erfindungsgemäßen Lautsprechereinrichtung ausgestattetes Mobiltelefon;
- Figur 4b: das Mobiltelefon gemäß Figur 4a als Explosionszeichnung (ohne Bildschirm);
- Figur 5: einen Lautsprecher mit einem die Form eines Kreissegments aufweisenden Schallauslass.

### 5) Beschreibung der Ausführungsbeispiele

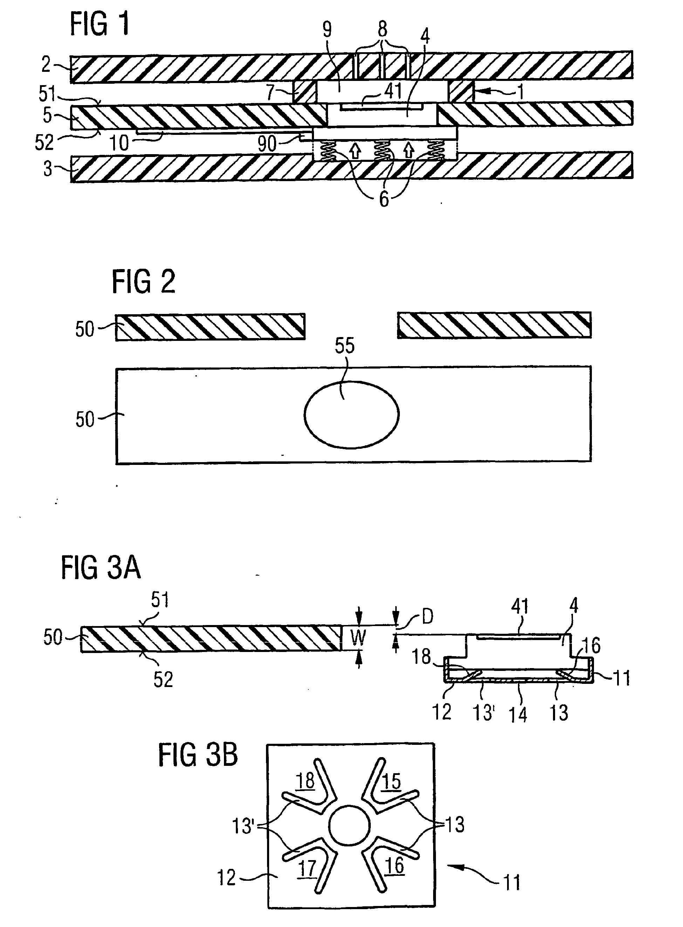

Die in Figur 1 nur schematisch dargestellte, in einem Gehäuse 2, 3 montierte Audioeinrichtung 1 besteht aus einem Schallwellen abstrahlenden oder Schallwellen detektierenden elektroakustischen Wandler (Mikrofon, Lautsprecher) und einem im Wesentlichen ebenen, der Halterung des Wandlers 4 dienenden, insbesondere plattenförmigen Trägerelement 5. Der als Mikrofon oder Lautsprecher eingesetzte Wandler 4 ist in einer dem Wandlerquerschnitt angepassten Bohrung, Öffnung oder Ausnehmung des Trägerelements 5 platz- und raumsparend derart angeordnet, dass die Schallwellen abstrahlende bzw. Schallwellen detektierende Wandlerfläche 41 nahezu bündig mit der dem oberen Gehäuseteil 2 gegenüberliegenden Fläche 51 des Trägerelements 5 abschließt. Mehrere sich auf dem unteren Gehäuseteil 3 abstützende Federelemente 6 erzeugen eine in Pfeilrichtung wirkende Haltekraft, welche die ringförmige Basis des Wandlers 4 von unten her gegen das Trägerelement 5 presst und ihn in dieser Position fixiert. Die Federelemente 6 lassen sich selbstverständlich auch durch einen während des Einbaus komprimierten gummielastischen Körper ersetzen, wobei dieser beispielsweise aus Silikongummi gefertigte Körper zur Erzeugung eines akustischen Resonanz- oder Hohlraums unterhalb des Trägerelements 5 auch die Form eines Ringes oder Hohlzylinders aufweisen kann. Eine ring- oder hohlzylinderförmige Struktur besitzt auch die zwischen dem oberen Gehäuseteil 2 und dem Trägerelement 5 angeordnete Dichtung 7, welche den die Schalldurchtrittsöffnung 8 und den Wandler 4 verbindenden Schallkanal 9 bildet oder eine als Schallkanal 9 wirkende Röhre mit dem gewünschten Querschnitt enthält.

Die Energieversorgung und die Ansteuerung des Wandlers 4 bzw. der Abgriff des vom Wandler 4 erzeugten, den Schalldruck repräsentierenden Signals erfolgt über mehrere, vorzugsweise federelastische Kontaktelemente 90 auf der Rückseite 52 des mit Leiterbahnen 10 versehenen und gegebenenfalls noch mit weiteren elektronischen Komponenten (Verstärker, Signalverarbeitung, Mikroprozessor usw.) bestückten Trägerelements 5.

Als Trägerelement kann insbesondere eine Leiterplatte 50 Verwendung finden (siehe Figur 2). Diese besitzt dann ebenfalls eine den elektroakustischen Wandler aufnehmende Öffnung 55, deren Form und Abmessungen dem Querschnitt des schallraumseitigen Teils des Wandlers entsprechen. Aus akustischen Gründen sollte der Einbau des Wandlers passgenau erfolgen, der zwischen Leiterplatte 50 und Wandler eventuell noch vorhandene Luftspalt also möglichst schmal ausfallen und die Spaltbreite beispielsweise nur Bruchteile eines Millimeters betragen. Lässt sich diese Forderung nicht ohne weiteres erfüllen, kann eine der Kontur der Leiterplattenöffnung 55 angepasste elastische Dichtung, beispielsweise eine am Wandler angebrachte Dichtlippe oder ein zwischen Leiterplattenöffnung 50 und Wandler eingebrachter Dichtring, Abhilfe schaffen.

Bei dem in Figur 3a dargestellten Ausführungsbeispiel schließt die schallraumseitige Wandlerfläche 41 nicht bündig mit der Oberfläche 51 des Trägerelements 50 ab. Der Abstand D ist hierbei so gewählt, dass er der Bedingung D ≤ W genügt, wobei sich im Falle D ≈ 0 ein maximaler Raum bzw. Volumengewinn im Gehäuse ergibt.

Die sich auf der Unterseite 52 der Leiterplatte 50 abstützende Basis des Wandlers 4 kann noch mit einem elektromagnetischen Störstrahlung abschirmenden Metallgehäuse 11 umgeben sein. Dieses an der Leiterplatte 50 befestigte oder gegebenenfalls über einen Metallrahmen mit der Leiterplatte 50 mechanisch starr verbundene Gehäuse 11 weist auf seiner Rückseite 12 mehrere Schalldurchtrittsöffnungen 13, 14 auf. Die symmetrisch bezüglich der insbesondere kreisrunden Zentralbohrung 14 angeordneten Öffnung 13, 13' sind vorzugsweise u-förmig oder v-förmig ausgebildet (siehe Figur 3b). In Richtung der Wandlerbasis abgeknickt oder abgewinkelt wirken die im gezeigten Ausführungsbeispiel insgesamt vier Gehäusezungen 15 - 18 als Federelemente, welche die den Wandler 4 in der Leiterplattenbohrung 55 fixierende Haltekraft erzeugen. Trotz Verwendung einer elektromagnetischen Abschirmung 11 bleibt auch bei diesem Ausführungsbeispiel ein ausreichend großer Resonanzraum zwischen der Lautsprecherbasis und einer nicht dargestellten hinteren Gehäusewandung.

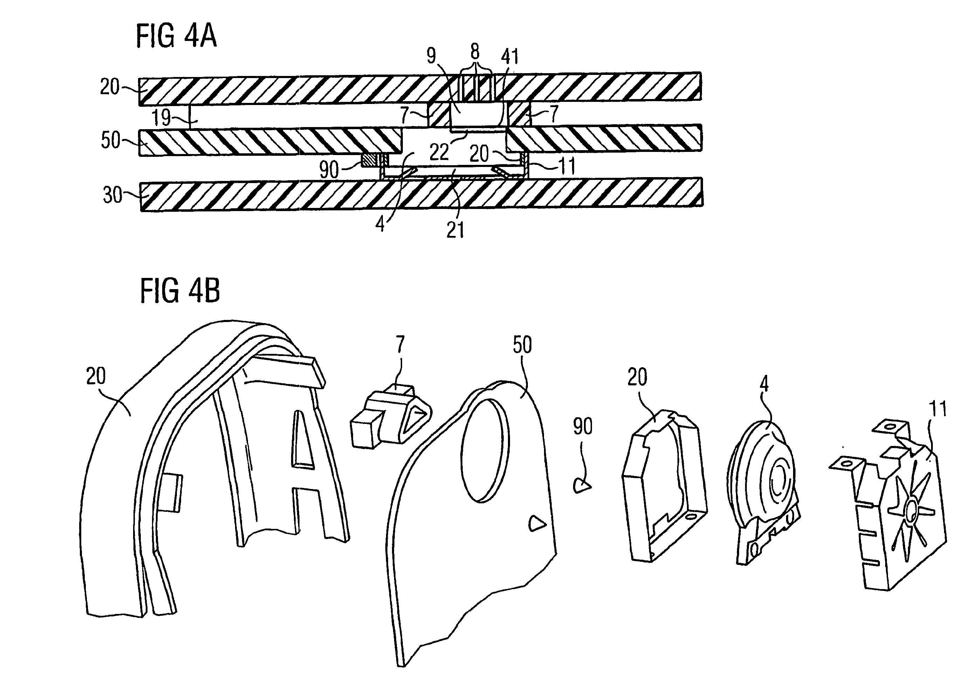

Die Figur 4 zeigt eine in das Gehäuse 20, 30 eines Mobiltelefons eingebaute Lautsprechereinrichtung gemäß der Erfindung. Diese Einrichtung weist wiederum einen als Lautsprecher dienenden, in einer Bohrung, Öffnung oder Ausnehmung der Leiterplatte 50 gehalterten elektroakustischen Wandler 4 auf. Da der zwischen der vorderen Gehäuseschale 20 und der Leiterplatte 50 angeordnete Bildschirm 19 in Richtung der nicht dargestellten, antennenseitigen Gehäusewand verschoben ist und die schallraumseitige Wandlerfläche 41 somit teilweise überdeckt, lassen sich alle Bedien- und Eingabeelemente samt dem Bildschirm 19 üblicher Größe in einem relativ kurzen und wegen der vorteilhaften Art und Weise der Lautsprechermontage, auch dünnen Gehäuse unterbringen.

Trotz Verwendung einer mittels eines Metallrahmens 20 an der Leiterplatte 50 befestigten Abschirmung 11 verbleibt zwischen der Lautsprecherbasis und der hinteren Gehäuseschale 30 ein ausreichend großer Resonanzraum. Mit 8 sind wieder die in der vorderen Gehäuseschale 20 vorhandenen Schallaustrittsöffnungen, mit 7 der den Schallkanal 9 bildende oder diesen als eigenständige Struktur enthaltende, gummielastische Körper, mit 90 der rückseitige Lautsprecherkontakt und mit 30 die hintere Gehäuseschale bezeichnet.

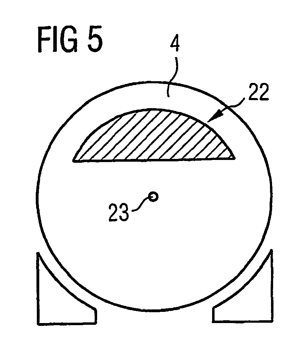

Aufgrund der teilweisen Überdeckung des Lautsprechers 4 durch den Bildschirm 19 sollte der Schallauslass 22 des Lautsprechers 4 nicht symmetrisch, sondern, wie in Figur 5 gezeigt, asymmetrisch bezüglich der Symmetrieachse S angeordnet sein. Das schraffiert dargestellte, den Lautsprecherauslass bildende Kreissegment 22 strahlt dann die erzeugten Schallwellen in einen Schallkanal mit einem dem Auslass 22 angepassten Querschnitt ab. Annähernd dieselbe Wirkung lässt sich durch Abdecken eines kreisförmigen Lautsprecherauslasses mit einer entsprechend strukturierten Maske oder Abdeckung erzielen.

## Patentansprüche

1. Audioeinrichtung zur Abstrahlung oder zum Empfang von Schallwellen mit mindestens einem elektroakustischen Wandler (4) und einem plattenförmigen Trägerelement (5, 50), wobei
der Wandler (4) in einer Bohrung, Öffnung, oder Ausnehmung (55) des Trägerelements (5, 50) derart angeordnet ist, dass eine Schallwellen abstrahlende oder eine Schallwellen empfangende Wandlerseite (41) annähernd bündig mit einer schallraumseitigen Oberfläche (51) des Trägerelements (5, 50) abschließt oder in einem Abstand D ≤ W unterhalb der schallraumseitigen Oberfläche (51) des Trägerelements (5, 50) der Dicke W zu liegen kommt,
**dadurch gekennzeichnet,**
**dass** der Wandler (4) auf der rückseitigen Oberfläche (52) des mit Leikrbahnen (10) versehenen Trägerelements (5, 50) elektrisch mit den Leiterbahnen (10) kontaktiert ist.

2. Audioeinrichtung nach Anspruch 1,
**gekennzeichnet durch**
mindestens ein federelastische Eigenschaften aufweisendes Kontaktelement (90).

3. Audioeinrichtung nach Anspruche 1 oder 2,
**dadurch gekennzeichnet,**
**dass** der Wandler (4) auf einer rückseitigen Oberfläche (52) des Trägerelements (5, 50) zumindest teilweise aufliegt oder sich mit seiner Basis darauf abstützt.

4. Audioeinrichtung nach einem der Ansprüche 1 bis 3,
**dadurch gekennzeichnet,**
**dass** zumindest ein über die rückseitige Oberfläche (51) des Trägerelements (5, 50) hinausragender Teil des Wandlers (4) mit einer elektromagnetischen Abschirmung (11, 20) versehen oder umgeben ist.

5. Audioeinrichtung nach Anspruch 4,
**dadurch gekennzeichnet,**
**dass** die Abschirmung (11) von einem am Trägerelement (5, 50) befestigten Rahmen (20) gehalten ist.

6. Audioeinrichtung nach Anspruch 4 oder 5,
**dadurch gekennzeichnet,**
**dass** die Abschirmung (11) Schalldurchtrittsöffnungen (13, 13') aufweist.

7. Audioeinrichtung nach einem der Ansprüche 4 bis 6,
**dadurch gekennzeichnet,**
**dass** die Abschirmung (11) oder der Rahmen (22) federelastische Elemente (16 bis 18) aufweist, welche eine in Richtung der rückseitigen Oberfläche (52) des Trägerelements (5, 50) wirkende Kraft auf den Wandler (4) ausübt.

8. Audioeinrichtung nach einem der Ansprüche 1 bis 7,
**gekennzeichnet durch**
ein zwischen einem Schalldurchtrittsöffnungen (8) aufweisenden vorderen Gehäuseteil (2, 20) und dem Trägerelement (5, 50) angeordnetes Dichtelement (7), welches einen den Schallauslass (22) oder den Schalleinlass des Wandlers (4) mit den Schalldurchtrittsöffnungen (8) verbindenden Schallkanal (9) bildet oder einen solchen Schallkanal als Struktur enthält.

9. Audioeinrichtung nach Anspruch 8,
**dadurch gekennzeichnet,**
**dass** die Schallwellen abstrahlende oder die Schallwellen empfangende Wandlerseite (41) mit einer dem Querschnitt des Schallkanals (9) angepassten Abdeckung versehen ist oder einen dem wandlerseitigen Querschnitt des Schallkanals angepassten, insbesondere kreissegmentförmigen Schalleinlass oder Schallauslass aufweist.

10. Audioeinrichtung nach einem der Ansprüche 1 bis 9, wobei das mit Leiterelementen (10) versehene Trägerelement (5, 50) eine Leiterplatte ist.

## Claims

1. Audio device for emitting or receiving sound waves having at least one electroacoustic transducer (4) and one plate-shaped carrier element (5, 50), wherein
the transducer (4) is disposed in a hole, opening or recess (55) of the carrier element (5, 50) in such a way that a transducer side (41) emitting sound waves or receiving sound waves terminates approximately flush with a sound space-side surface (51) of the carrier element (5, 50) or comes to rest at a distance D ≤ W beneath the sound space-side surface (51) of the carrier element (5, 50) of thickness W,
**characterised in that**
the transducer (4) is electrically contacted with conductor tracks (10) on the rear surface (52) of the carrier element (5, 50) provided with the conductor tracks (10).

2. Audio device according to claim 1,
**characterised by**
at least one contact element (90) having spring-elastic properties.

3. Audio device according to claims 1 or 2,
**characterised in that**
the transducer (4) bears at least partially on a rear surface (52) of the carrier element (5, 50) or is supported with its base thereon.

4. Audio device according to one of the claims 1 to 3,
**characterised in that**
at least one part of the transducer (4) projecting beyond the rear surface (51) of the carrier element (5, 50) is provided with or enclosed by an electromagnetic shielding (11, 20).

5. Audio device according to claim 4,
**characterised in that**
the shielding (11) is held by a frame (20) fixed to the carrier element (5, 50).

6. Audio device according to claim 4 or 5,
**characterised in that**
the shielding (11) has sound passage openings (13, 13').

7. Audio device according to one of the claims 4 to 6,
**characterised in that**
the shielding (11) or the frame (22) has spring-elastic elements (16 to 18) which exert a force on the transducer (4), said force acting in the direction of the rear surface (52) of the carrier element (5, 50).

8. Audio device according to one of the claims 1 to 7,
**characterised by**
a sealing element (7) arranged between a front housing part (2, 20) having sound passage openings (8) and the carrier element (5, 50), which sealing element (7) forms a sound channel (9) connecting the sound outlet (22) or the sound inlet of the transducer (4) to the sound passage openings (8) or contains a sound channel of said kind as a structure.

9. Audio device according to claim 8,
**characterised in that**
the transducer side (41) emitting the sound waves or receiving the sound waves is provided with a cover matched to the cross-section of the sound channel (9) or has a sound inlet or sound outlet, in particular in the shape of a circular segment, matched to the transducer-side cross-section of the sound channel.

10. Audio device according to one of the claims 1 to 9, wherein the carrier element (5, 50) provided with conductor tracks (10) is a printed circuit board.

## Revendications

1. Dispositif audio destiné à l'émission ou à la réception d'ondes sonores au moyen d'au moins un convertisseur électroacoustique (4) et d'un élément porteur (5, 50) en forme de plaque,
le convertisseur (4) étant disposé dans un alésage, un orifice ou un évidement (55) de l'élément porteur (5, 50), de telle manière qu'un côté (41) du convertisseur émettant des ondes sonores ou recevant des ondes sonores est approximativement au même niveau qu'une surface (51), du côté de l'espace acoustique, de l'élément porteur (5, 50) ou vient reposer à un écart D ≤ W, en dessous de la surface (51) du côté de l'espace acoustique de l'élément porteur (5, 50), de l'épaisseur W,
**caractérisé en ce**
**que** le convertisseur (4), sur la surface (52) arrière de l'élément porteur (5, 50) muni de conducteurs (10), est en contact électrique avec les conducteurs (10).

2. Dispositif audio selon la revendication 1,
**caractérisé par**
au moins un élément de contact (90) présentant des propriétés élastiques.

3. Dispositif audio selon la revendication 1 ou 2,
**caractérisé en ce**
**que** le convertisseur (4) repose au moins en partie sur une surface arrière (52) de l'élément porteur (5, 50) ou qu'il s'y appuie avec sa base.

4. Dispositif audio selon l'une quelconque des revendications 1 à 3,
**caractérisé en ce**
**qu'**au moins une partie du convertisseur (4) dépassant au-dessus de la surface arrière (51) de l'élément porteur (5, 50) est munie ou entourée d'un blindage électromagnétique (11, 20).

5. Dispositif audio selon la revendication 4,
**caractérisé en ce**
**que** le blindage (11) est maintenu par un cadre (20) fixé sur l'élément porteur (5, 50).

6. Dispositif audio selon la revendication 4 ou 5,
**caractérisé en ce**
**que** le blindage (11) présente des ouvertures de passage acoustiques (13, 13').

7. Dispositif audio selon l'une quelconque des revendications 4 à 6,
**caractérisé en ce**
**que** le blindage (11) ou le cadre (22) présente des éléments élastiques (16 à 18), lesquels exercent sur le convertisseur (4) une force agissant en direction de la surface arrière (52) de l'élément porteur (5, 50).

8. Dispositif audio selon l'une quelconque des revendications 1 à 7,
**caractérisé par**
un élément d'étanchéité (7) disposé entre une partie avant (2, 20) de boîtier présentant des ouvertures de passage acoustique (8) et l'élément porteur (5, 50), lequel élément d'étanchéité forme un canal sonore (9) raccordant la sortie acoustique (22) ou la sortie acoustique du convertisseur (4) aux ouvertures de passage acoustique (9) ou comprend un tel canal sonore comme structure.

9. Dispositif audio selon la revendication 8,
**caractérisé en ce**
**que** le côté (41) du convertisseur émettant des ondes acoustiques ou recevant des ondes acoustiques est muni d'un recouvrement adapté à la section du canal sonore (9) ou en ce qu'il présente une entrée acoustique ou une sortie acoustique adaptée à la section, du côté du convertisseur, du canal sonore, notamment une entrée acoustique ou une sortie acoustique en forme de segment de cercle.

10. Dispositif audio selon l'une quelconque des revendications 1 à 9, l'élément porteur (5, 50) muni d'éléments conducteurs (10) étant une plaquette à circuit imprimé.
